# DEMANDE DE BREVET EUROPEEN

(11) **EP 3 168 789 A1**
(43) Date de publication de la demande: **17.05.2017**
(21) Numéro de dépôt: 15306811.9
(22) Date de dépôt: 16.11.2015
(51) Int. Cl.: G06K 19/077, H01Q 1/22, H01Q 1/38, H01Q 7/00

(54) **PROCEDE DE REALISATION DE PISTES CONDUCTRICES SUR UN SUPPORT**

(71) Demandeur: GEMALTO SA, 92190 Meudon (FR)
(72) Inventeur: GASPARI, Sébastien, 13881 GEMENOS Cedex (FR); ALLEYSSON, Blandine, 13881 GEMENOS Cedex (FR); KERGUEN, Elisabeth, 13881 GEMENOS Cedex (FR); LEVEQUE, Olivier, 13881 GEMENOS Cedex (FR)
(74) Mandataire: Milharo, Emilien

(57) **Abrégé**

L'invention concerne une Antenne (14) pour transpondeur radiofréquence, ladite antenne comprenant des portions de fil conducteur majoritairement incrustées (14i) et des portions de fil conducteur minoritairement non incrustées (14a) sur un support plan (4) ;

L'antenne est caractérisée en ce que lesdites portions de fil minoritairement non incrustées (14a) s'étendant sur ou croisent au moins une ligne privilégiée de pliure (5T, 5L) et/ou une ligne de pliure prédéfinie selon un test normalisé de résistance au pliage.

L'invention concerne également un objet portable électronique comprenant ladite antenne et un procédé de réalisation correspondant.

## Description

### Domaine de l'invention.

L'invention concerne un procédé de réalisation de pistes conductrices sur un support et notamment du fil incrusté sur un support.

Il concerne de préférence la réalisation d'un fil d'antenne incrusté pour transpondeur radiofréquence. Le fil incrusté selon l'invention présente une résistance mécanique améliorée en cas de flexion de son support.

L'invention concerne notamment le domaine des supports d'antenne radiofréquence tels que des passeports électroniques, documents de voyage, carte à puce, tickets, étiquettes radiofréquences, des transpondeurs radiofréquences, insert (ou inlay).
De tels objets peuvent être conformes notamment au standard ISO / IEC 14443 ou UHF.

### Art antérieur.

Il est connu de modifier l'agencement des spires d'une antenne radiofréquence notamment l'écartement inter spires pour satisfaire les accords en fréquence nécessaires à la communication. Il est possible notamment de prévoir des zones de l'antenne où les spires sont écartées volontairement par rapport à une distance inter spires normale de manière à disposer d'une capacité inter-spire pour ajuster sur l'accord en fréquence.

La demande de brevet de la demanderesse EP2579389 (A1) résout un problème de résistance à la pliure de l'antenne. La solution consiste à rapprocher les fils conducteurs entre eux au moins dans la zone identifiée de contrainte.

### Problème technique.

Dans les passeports notamment, les supports d'antenne constitués par une feuille du livret de passeport ou la couverture, il a été constaté des points de fragilisation au cours du test ci-après de résistance mécanique comportant des flexions et torsions (WG3TF4_N0232_Spécifications de test pour MPRs V3.2 §5.7).

Le problème technique est une tendance à la pliure de support d'antenne dans les livrets de passeport. La tendance à la pliure dans des endroits privilégiés de pliure correspond aux lignes de pliures du test normalisé visé précédemment. Une première ligne de pliure correspond à une première médiane située sensiblement perpendiculairement à une charnière de livret du passeport ou autre livret ou inlay radiofréquence.

Une seconde ligne de pliure correspond sensiblement à une seconde médiane de page de passeport parallèle à la charnière de passeport.

L'invention vise en général à améliorer la résistance mécanique à la flexion de fil incrusté sur un support.

L'invention a pour objectif particulier de proposer un transpondeur à antenne ou inlay qui soit plus résistant aux flexions précitées et plus facile à mettre en oeuvre sans modifier les performances radiofréquences.

### Résumé de l'invention.

L'invention consiste à ne pas incruster les pistes ou fils dans une feuille support et /ou ne pas tendre ou déposer avec moins de contrainte de tension, les fils ou pistes au moins dans une zone identifiée de contrainte par pliure de la feuille support supportant les pistes ou fils en utilisation ou en test.

Pour cela, selon un mode préféré de réalisation l'invention, la piste est un fil d'antenne qui est déroulé par une tête de dépose sans tension ou avec beaucoup moins de tension dans une zone sensiblement centrée sur une ligne ou axe de contrainte ou de pliure visé précédemment.

En outre dans cette zone, le fil peut être levé pour enjamber la zone centrée sur la pliure au dessus de la surface de la feuille support. Le fil est donc moins soumis dans cette zone comparativement aux autres zones incrustées, à des contraintes mécaniques lors de son déroulé (ou son dépôt) et fixation sur le support.

L'invention a donc pour préférentiellement pour objet une antenne pour transpondeur radiofréquence, ladite antenne comprenant des portions de fil conducteur majoritairement incrustées et des portions de fil conducteur minoritairement non incrustées sur un support plan ; L'antenne est caractérisée en ce que lesdites portions de fil minoritairement non incrustées s'étendent sur au moins une ligne (ou axe) privilégiée de pliure et/ou une ligne de pliure prédéfinie selon un test normalisé de résistance au pliage.

On obtient des résultats nettement plus performants en terme de résistance, par exemple augmenté de 50 %, lorsque les fils de l'antenne situés sur et au voisinage de la pliure, ne sont pas incrustés lors de la formation de l'antenne par incrustation et/ou ne sont pas déroulés sous tension ou contrainte dans une zone centrée autour des pliures.

Selon d'autres caractéristiques de l invention :
- Le support plan comprend au moins un bord longitudinal, au moins une ligne privilégiée ou prédéfinie de pliure correspondant à une médiane du support plan perpendiculaire au bord longitudinal ;
- Les portions de fil s'étendent en parallèle par rapport au bord longitudinal du support plan ;
- Le support plan comprend au moins un bord transversal perpendiculaire au bord longitudinal et au moins une ligne privilégiée de pliure et/ou une ligne de pliure prédéfinie s'étend sur ou autour d'une médiane (ML) du support plan, ladite médiane (ML) étant perpendiculaire au bord transversal ;
- Ladite au moins une portion de fil s'étend en parallèle par rapport au bord transversal du support plan ;
- Le bord longitudinal est adjacent à une charnière de livret et/ou ledit bord transversal est perpendiculaire à ladite charnière de livret ;

L'invention a également pour objet un objet portable électronique comportant l'antenne ci-dessus ; Il peut constituer de préférence un passeport, un livret, le l'antenne étant portée par une feuille ou une couverture du livret ou du passeport.

L'invention a également pour objet un procédé de réalisation correspondant à l'antenne ci-dessus. - Le procédé peut réduire un niveau de tension ou de traction du fil conducteur par rapport à un niveau de tension de fil requis pour l'incrustation du fil, quand le fil passe sur une zone de pliure ou de non incrustation de fil.

### Brève description des figures.

- La figure 1 illustre un test de flexion soumis à un livret de passeport ;
- La figure 2 illustre le passeport en vue de profil montrant la reliure 2 et le bord opposé 3 ;
- La figure 3 illustre l'apparition d'une pliure apparaissant sur une médiatrice transversale du passeport ;
- La figure 4 illustre un transpondeur de l'art antérieur comprenant une antenne spiralée et un module de circuit intégré disposé sur une page ou couverture de passeport ;
- La figure 5 illustre une feuille support plane avec deux motifs d'antenne radiofréquence sur deux pages de passeport avant séparation et découpe ;
- Les figures 6 illustre une vue plus détaillée d'une antenne similaire à celle de la figure précédente réalisée selon un mode préférée de l'invention sur un support plan mais avec sensiblement le même espacement inter spires partout ;
- La figure 7 illustre une vue en coupe selon A-A de la figure 5 ;
- La figure 8 illustre des étapes du procédé selon un mode de mise en oeuvre.

### Description

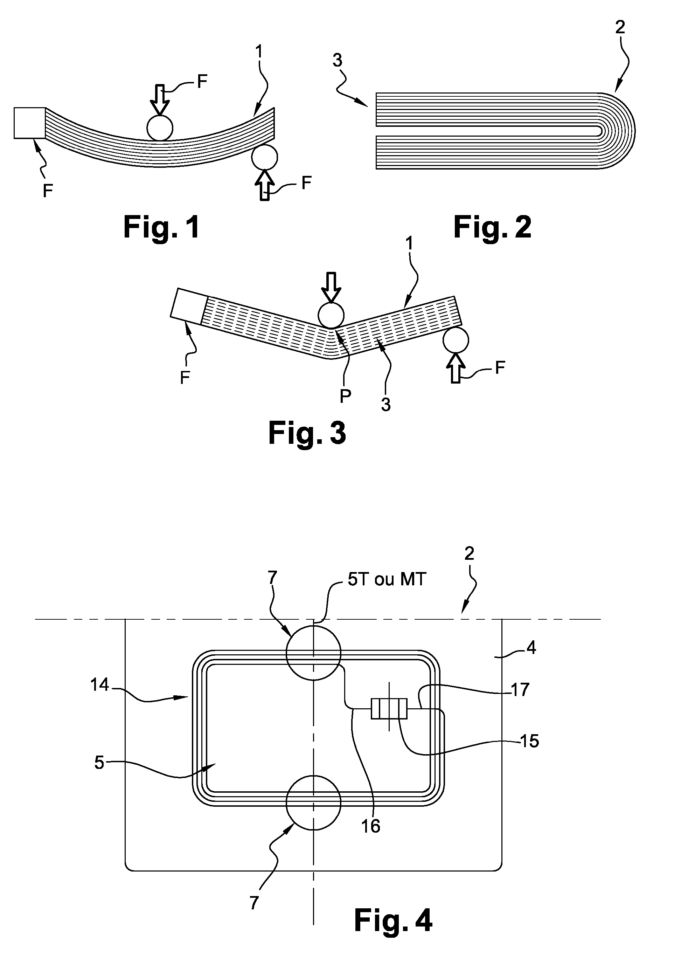

A la figure 1, un livret 1 notamment de passeport est soumis à un test de flexion comme illustré sur la figure par une pression F exercée au centre et aux bords en réaction.

La figure 2 illustre le livret en vue de profil montrant la reliure 2 et le bord opposé 3.

A la figure 3, les flexions du test donnent naissance à une pliure P sur une médiatrice transversale MT du livret.

Lorsque la flexion F est appliquée selon une ligne ou axe de pliure perpendiculaire à la reliure 2 (ou bord 3), celle-ci commence à marquer un pli P et la contrainte s'accumule sur le pli. Le pli vient à se propager dans le livret comprenant la feuille support d'antenne et provoque un cisaillement des fils d'antenne dans chaque zone 7 en premier lieu. Puis le cisaillement peut se propager sur toute la largeur du livret jusqu'aux fils de l'antenne situés proche du bord du livret opposé à la reliure.

A la figure 4, une feuille de passeport de l'art antérieur présente un support plan 4 supportant un transpondeur radiofréquence 14, 15, un bord longitudinal 2 proche de la reliure de passeport, une antenne 14 de réception par couplage électromagnétique 14 sur le support. L'antenne comporte des spires entourant une surface de couplage centrale ; Les spires s'étendent au moins en partie parallèlement et à proximité du bord longitudinal 2.

L'antenne est ici réalisée en un fil incrusté dans le support. L'antenne est connectée à un micromodule électronique comprenant une puce de circuit intégré radiofréquence 15 par l'intermédiaire des extrémités de connexion 16 et 17. Il n'est pas exclu de prévoir d'autres techniques de réalisation d'antenne connues de l'homme de l'art, telles que la broderie, le transfert d'antenne déjà bobinée, la gravure. Toutefois, pour des questions de performance de communication, l'invention vise de préférence des antennes filaires de section (ou diamètre) sensiblement constante.

L'antenne peut comprendre au moins les spires elles-mêmes et le substrat. Par antenne au sens de l'invention, on peut parler aussi d'insert (inlay en anglais) d'antenne ou de transpondeur radiofréquence avec ou sans puce de circuit intégré connectée. L'antenne peut être finie ou semi-finie dans la mesure où elle peut être destinée à être connectée ou non à un ou plusieurs composants électriques, électronique.

Le cas échéant dans certaines applications, notamment pour objet à interface duale ou objet radiofréquence à antenne passive (antenne relai), l'antenne peut être nue (non connectée à une puce de circuit intégré) ; L'antenne peut être connectée à une capacité. L'antenne peut être de type UHF ou autre comme les étiquettes RFID.

Les spires de l'antenne ou du moins celles disposées tout le long du bord 2 adjacent correspondant à la reliure 2, et présentent un espacement inter-spires sensiblement constant et réduit par rapport aux spires orientées perpendiculairement à ce bord de reliure 2. En effet, selon le brevet EP 2579389, un espace inter spires réduit permet aussi de réduire les contraintes de cette zone 7.

L'espacement des dernières spires orientées perpendiculairement à ce bord de reliure 2 est par exemple couramment compris entre 0.1 et 2 mm pour des fils de diamètre compris entre 50 et 150 µm.

Les régions 7 des spires (ou fil d'antenne) situées sur les médianes des bords longitudinaux 2 et transversaux 12 des régions particulièrement exposées à des axes de contraintes 5T (ligne privilégié ou prédéfinie de pliure ou comme symbolisé par une flèche F).

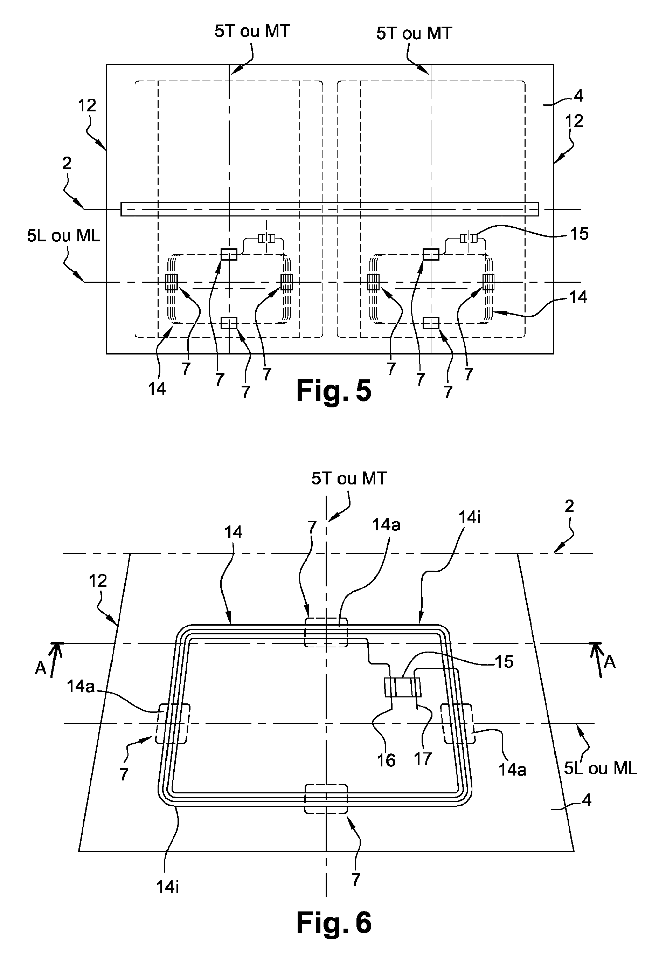

A la figure 5 ou 6, selon un premier mode de réalisation de l'invention, un support 4 à antenne (ici sous forme de feuille plane à deux motifs d'antenne), porte une antenne 14 s'étendant sur ou parallèlement à une de ses surfaces principales ; Le support 4 à antenne de la figure 6, est sensiblement conforme à la figure précédente 5 avec les différences d'espacement inter-spires réduits sur les côtés longitudinaux de l'antenne par rapport aux côtés transversaux.

L'antenne peut être sous forme de spires en boucle ouverte ou fermée pour la technologie à induction notamment ISO 14443 ou comprenant des lignes droites par exemple pour la technologie UHF.

Le support 4 est ici une feuille de production de deux inserts (fig. 6) pour passeport avec deux motifs d'antenne 14 à spires ; Le support 2 comprend un bord 2 longitudinal, destiné à être parallèle et adjacent à une reliure 2 de livret de passeport et un bord transversal 12 perpendiculaire au précédent bord longitudinal 2 ;

L'antenne 14 est ici en forme de rectangle et comporte quatre spires ou des fils parallèles (grand côté du rectangle) et perpendiculaires (petits côtés du rectangle) s'étendant respectivement parallèlement et perpendiculairement au bord longitudinal (2).

L'antenne 14 comprend également des portions de fil conducteur majoritairement incrustées 14i sur le support plan 4. L'antenne peut comprendre des portions de fil conducteur nécessairement non incrustées 14a dans le support plan à des fins autres que pour limiter les contraintes sur le fil au cours du pliage de son support.

Par exemple, l'antenne peut comporter des portions situées en fin ou au début de parcours de l'antenne. Dans l'exemple, des portions d'antenne non incrustées peuvent être situées à proximité des extrémités ou bornes de connexion) 16, 17 d'antenne pour connecter le module 15. Ces portions peuvent aussi comprendre des portions libres s'étendant vers les extrémités 16, 17 de l'antenne après la connexion électrique au module 15.

Selon une caractéristique de ce premier mode, l'antenne comprend aussi des portions de fil minoritairement non incrustées 14a qui s'étendent sur (ou sont traversées par) des lignes privilégiées de pliures 5T ou 5L et/ou des lignes prédéfinies de pliure selon un test normalisé de résistance au pliage.

Les fils incrustés 14i sont minoritaires en proportion par rapport aux portions de fils non incrustés 14a.

Ces portions non incrustées 14a sont localisées en plein milieu ou sur le parcours de fil d'antenne. On dispose de manière singulière sur le produits conformes à l'invention d'alternances de fil incrusté par exemple sur au moins 2 à 4 cm sur le parcours d'antenne suivi de fil non incrusté sur par exemple 4 à 1,5 cm.

Les zones 7 comprennent dans l'exemple plusieurs fils non incrustés parallèles qui s'étendent hors de la surface du support plan 4.

Les portions de fil non incrustées 14a sont volontairement posées ainsi dans les zones 7 au cours de la réalisation de l'antenne. Toutefois, il est possible que ces portions de fil 14a soient légèrement incrustés par exemple jusqu'à 50 % dans cette feuille support notamment au cours d'opérations ultérieures de lamination avec des feuilles de couverture ou de décoration.

La matière de recouvrement de l'antenne peut comprendre une couche de matière plus molle que la feuille support 4 et déposée, par exemple, par dépôt ou sérigraphie, impression 3D, jet de matière, jet d'encre à base élastomère. Cette couche couvre de préférence au moins chaque zone 7. Cette couche à de préférence la hauteur des fils non incrustés de manière à contenir au moins en grande partie chaque portion dans de la matière plus molle ou déformable facilement que la feuille support 4 sous l'effet de contraintes mécaniques.

Alternativement, les portions de fil 14a non incrustées ou non noyées dans la matière 4, se trouvent incrustées ou noyées chacune dans une fenêtre correspondant à chaque zone 7 mais la fenêtre étant ménagée dans les feuilles 4.

Donc, les portions non incrustées dans la feuille 4 peuvent se retrouver noyées par la suite dans des portions de matière plus molle ou élastique (ou portions sans matière) que la matière de la feuille support.

Ainsi par exemple, avant incrustation, la matière des feuilles 4 à l'aplomb des zones 7 sont évidées notamment par poinçonnage. Les fils sont incrustés en passant dans les zones évidées à l'aplomb des zones 7, puis ces zones sont remplies de matière 4M plus molle ou élastique que celle de la feuille support 4.

Alternativement, les zones évidées à l'aplomb des zones 7 sont d'abord remplies de matière 4M plus molle ou élastique que celle de la feuille support 4. Puis, on procède à l'incrustation de fil (ou réalisation de toute piste d'antenne) sur tout le support y compris ou non dans la matière 4M.

Les lignes de pliures correspondent ici dans l'exemple, à des lignes prédéterminées de pliure ou des lignes de pliures s'établissant préférentiellement sur le support compte tenu de la configuration et/ou utilisation du transpondeur radiofréquence dans un objet quelconque (livret de passeport, couverture de livret, carte, ticket titre radiofréquence, paroi de sac, paroi de vêtement, de cartonnage, ligne de repassage, de pliage...)

Selon une caractéristique d'un mode de réalisation, le support plan 4 comprend au moins un bord longitudinal 2, et les zones 7 de non incrustation s'étendent sur ou autour (notamment à cheval) d'une médiane transversale MT du support plan, ladite médiane transversale MT étant perpendiculaire au bord longitudinal 2.

De préférence, la portion de surface ou zone 7 est située ou s'étend sur une médiane MT transversale du support 4.

Selon une autre caractéristique du mode de réalisation, les portions de fil non incrustées 14a s'étendant en parallèle par rapport au bord longitudinal 2 du support plan 4. Ces portions 14a appartiennent à des spires qui s'étendent parallèlement au bord longitudinal 2 du support plan.

D'une manière générale, les portions 14a peuvent s'étendre perpendiculairement aux lignes de pliures du support. Cependant, ces portions 14a, pourraient s'étendre autrement, par exemple en oblique ou en zigzag dans la zone 7.
Les spires ont généralement dans l'exemple un espacement inter-spires compris entre 0.1 et 2 mm. Les fils ont un diamètre compris entre 50 et 150 µm.

Selon une autre caractéristique du mode de réalisation, le support plan 4 comprend au moins un bord transversal 12 perpendiculaire au bord longitudinal 2 défini ci-dessus ; En outre, des lignes privilégiées de pliures (ou de contraintes en compression/tension des fils d'antenne) et/ou les lignes de pliure prédéfinies 5L s'étend sur ou correspond à une médiane longitudinale ML du support plan, ladite médiane (ML) étant perpendiculaire au bord transversal 12.

Selon une caractéristique de l'invention, les zones 7 sont disposées autour des médianes du support d'antenne où s'effectue le pliage.

En fait, les médianes MT et ML correspondent à des médiatrices transversale et longitudinale d'une feuille rectangle 4 élémentaire après découpe d'une feuille à transpondeur multiple.

Selon une autre caractéristique du mode de réalisation, les portions de fil 14a s'étendent en parallèle par rapport au bord transversal 12 du support plan 4. Cependant, comme précédemment, ces portions 14a, pourraient s'étendre autrement qu'en parallèle, par exemple en oblique en zigzag dans la zone 7.

Selon une autre caractéristique de chaque mode réalisation, le bord longitudinal 2 est parallèle ou est destiné à être parallèle à une reliure de livret. Ici, dans l'exemple le bord 2 et parallèle parce qu'il correspond à la reliure d'un passeport.

Selon une autre caractéristique de chaque mode réalisation, le bord longitudinal 2 est adjacent à une charnière de livret et/ou le bord transversal 12 est perpendiculaire à la charnière de livret. Dans l'exemple, le bord 2 de l'insert correspond à la reliure d'un passeport. Le bord transversal 12 correspond à l'un des deux bords latéraux d'un passeport.

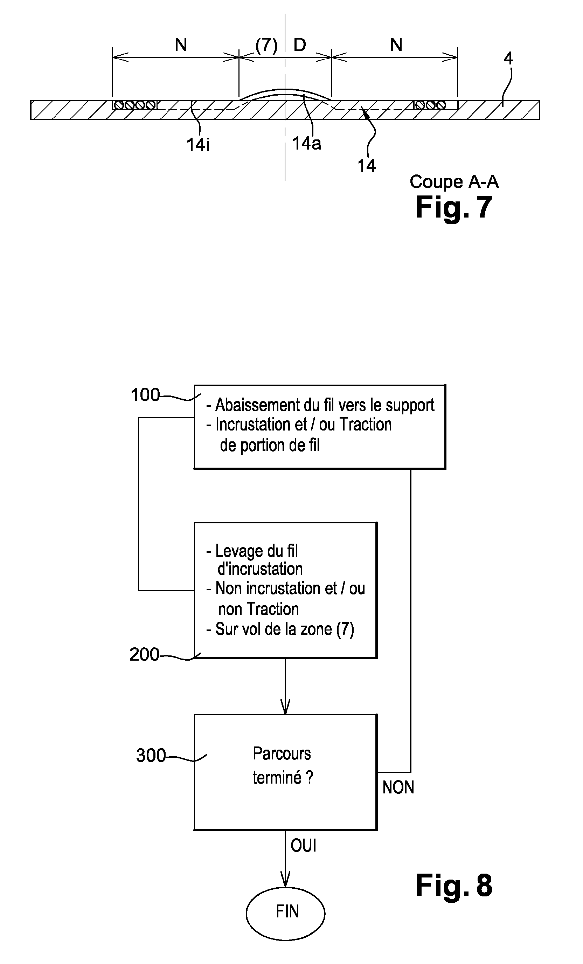

Selon une autre caractéristique du mode de réalisation, les portions de fil non incrustées 14a s'étendent sur une longueur D comprise entre 3 et 30 mm ou préférentiellement entre 10 et 25 mm (Fig. 6 & 7). L'invention peut concerner tout objet portable électronique comportant le transpondeur décrit ci-dessus. En particulier, il peut comprendre un passeport, un livret, le transpondeur étant porté par une feuille ou une couverture du livret.

Le procédé de réalisation d'une antenne pour transpondeur radiofréquence est décrit en relation avec la figure 8. Le procédé consiste à réaliser une antenne comprenant des portions de fil conducteur majoritairement incrustées 14i (sur une longueur N) et des portions de fil conducteur minoritairement non incrustées 14a (sur une longueur N) sur un support plan (avec un total de longueurs N supérieur à un total des longueurs D) ;

A l'étape 100, une tête d'incrustation de fil abaisse le fil conducteur vers le support plan dans une zone du support située hors d'une zone prévisible de pliage ou de rupture du fil d'antenne et on effectue une incrustation, notamment par ultrasons, une portion de fil d'antenne dans le support plan.

Ensuite, selon une caractéristique de ce mode, selon une étape 200, une portion minoritaire de fil d'antenne 14a est non incrustée dans une zones choisie 7 sur une longueur D de manière à pouvoir s'étendre sur (ou traverser des) une ou des lignes prévisibles ou privilégiées de pliure 5T, 5L et/ou une ou des lignes de pliure prédéfinies 5T, 5L (ou médiatrices du support correspondantes MT, ML) d'après un test normalisé de résistance au pliage.
Le fil est alors levé par une tête d'incrustation, puis déroulé le long d'une zone 7 ou en survolant cette zone7.

A l'étape 300, si le parcours n'est pas terminé, le procédé réalise à nouveau une incrustation dans une zone de longueur N (fig. 7) dans le cas contraire, il est mis fin à la réalisation de l'antenne.

Selon une caractéristique du mode préféré, quand le fil passe sur une ligne de pliure 5T, 5L ou zone 7 de non incrustation de fil, l'invention prévoit de diminuer le niveau de tension ou de traction sur le fil conducteur 14 par rapport à un niveau de tension de fil requis pour l'incrustation dans des portions de longueur N.

En effet, lors de l'incrustation, le fil est tracté est tendu par la tête à ultrasons ou de dépose du fil. Alternativement, la traction peut résulter d'un déplacement relatif d'une table support de travail ou tapis transporteur par rapport à une tête de dépose de fil par rapport à une tension de fil qui est incrusté. L'idée dans un des modes de l'invention est de donner du mou en mettant plus de longueur de fil en réalisant un profil trapézoïdal, rectangulaire, ou triangulaire, plutôt qu'une ligne droite.

Selon une caractéristique du mode préféré, le niveau de tension ou de traction sur le fil est au moins divisé par deux, quand le fil s'étend au-dessus de la ligne de pliure 5T, 5L ou zone 7 de non incrustation de fil.

Dans la pratique, non seulement la traction peut être divisé au moins par deux voire être nulle sur cette zone 7 mais le fil peut être compressé longitudinalement dans cette zone 7 ce qui peut produire une boucle ou un léger bombé hors du support dans cette zone 7.

On peut procéder ensuite à la connexion du module de circuit intégré 15 après réalisation de l'antenne 14, le module pouvant être en place dans un emplacement ou cavité, pendant la réalisation de l'antenne ou non. Ensuite, l'invention peut prévoir d'assembler des feuilles de couverture ou de décoration finales notamment sur l'antenne de manière à former un produit fini ou un insert ou inlay radiofréquence intermédiaire.
L'insert peut être ensuite introduit dans tout objet notamment livret, feuille ou couverture de passeport,

Bien que décrit en relation avec une antenne, l'invention peut s'appliquer à la réalisation de pistes métalliques et/ou conductrices électriquement en général, notamment par fil déposé sur un support quelconque.

La proportion de fil incrusté par rapport au fil non incrusté peut varier. Le fil non incrusté peut devenir majoritaire dans certains cas non préféré. L'écartement inter spires des fils est mieux contrôlé dans les portions où le fil est incrusté.

## Revendications

1. Antenne (14) pour transpondeur radiofréquence, ladite antenne comprenant des portions de fil conducteur majoritairement incrustées (14i) et des portions de fil conducteur minoritairement non incrustées (14a) sur un support plan (4),
**caractérisée en ce que** lesdites portions de fil minoritairement non incrustées (14a) s'étendant sur ou croisent au moins une ligne privilégiée de pliure (5T, 5L) et/ou au moins une ligne de pliure prédéfinie selon un test normalisé de résistance au pliage.

2. Antenne selon la revendication précédente, **caractérisée en ce que** ledit support plan (4) comprend au moins un bord longitudinal (2), ladite au moins une ligne privilégiée ou prédéfinie de pliure (5L, 5T) correspondant à une médiane (Mt) du support plan perpendiculaire au bord longitudinal (2).

3. Antenne selon la revendication précédente, **caractérisée en ce que** lesdites portions de fil non incrustées (14a) dans le support plan s'étendent en parallèle par rapport au bord longitudinal (2) du support plan (4).

4. Antenne selon la revendication 1, **caractérisée en ce que** ledit support plan (4) comprend au moins un bord transversal (12) perpendiculaire au bord longitudinal et au moins une ligne privilégiée de pliure et/ou une ligne de pliure prédéfinie correspond à une médiane (ML) du support plan, ladite médiane (ML) étant perpendiculaire au bord transversal (12).

5. Antenne selon la revendication précédente, **caractérisée en ce que** lesdites portions de fil (14a) s'étendent en parallèle par rapport au bord transversal (12) du support plan (4).

6. Antenne selon l'une quelconque des revendications précédentes, **caractérisée en ce que** ledit bord longitudinal (2) est parallèle ou est destiné à être parallèle à une reliure de livret.

7. Antenne selon l'une quelconque des revendications 2 à 6, **caractérisée en ce que** ledit bord longitudinal (2) est adjacent ou correspondant à une charnière (2) de livret et/ou ledit bord transversal (12) est perpendiculaire à ladite charnière de livret.

8. Antenne selon l'une quelconque des revendications précédentes, **caractérisée en ce que** le fil d'antenne a un diamètre compris entre 50 et 150 µm.

9. Antenne selon l'une quelconque des revendications précédentes, **caractérisée en ce que** les portions de fil non incrustées (14a) s'étendent sur une longueur comprise entre 3 et 30 mm.

10. Antenne selon la revendication précédente, **caractérisée en ce que** les portions de fil non incrustées (14a) s'étendent sur une longueur comprise entre 5 et 10 mm.

11. Objet portable électronique comportant l'antenne selon l'une des revendications précédentes.

12. Objet portable électronique selon la revendication 11 constituant un passeport, un livret, l'antenne étant portée par une feuille ou une couverture du livret ou de passeport.

13. Procédé de réalisation d'une antenne pour transpondeur radiofréquence, ladite antenne comprenant des portions de fil conducteur majoritairement incrustées (14i) et des portions de fil conducteur minoritairement non incrustées (14a) sur un support plan (4),
**caractérisé en ce qu'**il comprend l'étape selon laquelle des portions de fil d'antenne minoritairement non incrustées (14a) sont réalisées de manière à s'étendre sur au moins une ligne privilégiée de pliure (5T, 5L) et/ou une ligne de pliure prédéfinie selon un test normalisé de résistance au pliage.

14. Procédé de réalisation d'une antenne selon la revendication précédente, **caractérisé en ce qu'**il comprend une étape selon laquelle un niveau de tension ou de traction sur le fil conducteur est réduit par rapport à un niveau de tension de fil requis pour l'incrustation, quand le fil passe sur une zone de pliure ou de non incrustation de fil (7).

15. Procédé de réalisation d'une antenne de champ magnétique selon la revendication 14, **caractérisé en ce que** ledit niveau de tension ou de traction est au moins divisé par deux, le fil s'étendant au-dessus de ladite zone (7) de pliure ou de non incrustation de fil.
